# EUROPEAN PATENT APPLICATION

(11) **EP 3 379 685 A1**
(43) Date of publication of application: **26.09.2018**
(21) Application number: 16866657.6
(22) Date of filing: 17.11.2016
(51) Int. Cl.: H02J 7/00, B60R 16/033

(54) **JUMP STARTER APPARATUS FOR RECHARGING DISCHARGED BATTERY OF TRANSPORTATION MEANS**

(30) Priority: 17.11.2015 KR 20150160947
(71) Applicant: Park, Youngmin, Busan 46326 (KR)
(72) Inventor: Park, Youngmin, Busan 46326 (KR)
(74) Representative: Jacobi, Markus Alexander
(86) International application number: PCT/KR2016/013254
(87) International publication number: WO 2017/086705

(57) **Abstract**

The present invention relates to a jump starter apparatus for recharging a discharged battery of a transportation means. More specifically, the present invention relates to a jump starter apparatus for recharging a discharged battery of a transportation means, which, in a situation where battery discharge is continuously increasing as various electronic and electronic devices have a tendency to operate even after the engine of a vehicle is stopped, can reduce the cost by using a fewer number of battery cells than a conventional portable jump starter apparatus while completing battery charging in only a few seconds, and in addition, can maximize portability and convenience by minimizing the volume and weight thereof. To this end, the present invention provides a jump starter apparatus for recharging a discharged battery of a transportation means, the jump starter apparatus comprising: a battery cell unit which includes a plurality of primary or secondary cells electrically connected in series/parallel, so as to generate direct current power for recharging a discharged battery of a transportation means; a booster circuit unit which is electrically connected to the (+) terminal and the (-) terminal of the battery cell unit, so as to boost the voltage of power output from the battery cell unit to a specific value or higher; and a connection terminal which is electrically connected on one side to the booster circuit and is electrically connected on the other side to a terminal of a battery to be recharged.

## Description

### [Technical Field]

The present invention relates to a jump starter apparatus for recharging a discharged battery of a transportation means. More specifically, the present invention relates to a jump starter apparatus for recharging a discharged battery of a transportation means, which, in a situation where battery discharge is continuously increasing as various electric and electronic devices have a tendency to operate even after the vehicle stalls, can reduce costs by using a smaller number of battery cells than a conventional portable jump starter apparatus while completing battery charging in only a few seconds, and can maximize portability and convenience by minimizing the volume and weight thereof.

### [Background Art]

A battery is used to start the vehicle and to operate the electric devices. During operation of the engine, the generator supplies power to each electric component. When the engine is stopped or started, the generator will not operate and thus the battery will supply power.

A vehicle battery can be discharged by a load, and self-discharge may occur if the battery is left in a no-load state for a long time. If battery power is insufficient due to discharge, the engine cannot be started and the battery should be charged using an external power source.

Generally, when the battery is discharged, it is assisted by another vehicle or an insurance company's emergency service is used. It is difficult to get help from another vehicle if the vehicle to be helped is not in the right position. Further, when battery discharge occurs during rush hour, it may take a long time for the charging vehicle of the insurance company to arrive.

As an alternative, portable battery chargers have been developed and released. A battery charger includes a rechargeable lithium polymer battery and is carried in preparation for battery discharge in a vehicle. Most of these products are expensive and require at least 10 minutes or more to complete charging, which is why consumers are reluctant to buy such products.

An emergency car battery charger using commercially available batteries is disclosed in Korean Utility Model No. 0257122 (issued on Dec. 24, 2001). According to this technique, 13.5 V is obtained by connecting nine 1.5 V batteries in series and three groups of the nine batteries are connected in parallel and plugged into cigarette lighter of the vehicle to charge the vehicle battery for 10 to 20 minutes. This technique takes at least 27 batteries and can generate current of about 3A. This technique has a drawback of an excessively long charging time and an excessively large number of required batteries.

### [Disclosure]

### [Technical Problem]

Therefore, the present invention has been made in view of the above problems, and it is one object of the present invention to provide a jump starter apparatus for recharging a discharged battery, which is portable, capable of rapid charging and inexpensive.

### [Technical Solution]

In accordance with one aspect of the present invention, provided is a jump starter apparatus for recharging a discharged battery of a transportation means, including a battery cell unit including a plurality of primary or secondary battery cells electrically connected in parallel so as to generate direct current power for recharging the discharged battery of the transportation means; a booster circuit unit electrically connected to a (+) terminal and a (-) terminal of the battery cell unit so as to boost a voltage of power output from the battery cell unit to a specific value or higher; and a connection terminal one side of which is electrically connected - to the booster circuit unit and the other side of which is electrically connected to a terminal of a battery to be recharged.

The battery cell unit may generate a direct current greater than or equal to 30 A by connecting the plurality of primary battery cells in series/parallel, and the booster circuit unit may output a direct current voltage of 12 to 48 V.

The booster circuit unit may include a first resistor electrically connected to the (+) terminal of the battery cell unit; a first capacitor electrically connected between the first resistor and the (-) terminal of the battery cell unit; an inductor electrically connected to the (+) terminal of the battery cell unit and connected in parallel with the first resistor; a second resistor electrically connected to the inductor; a transistor having a collector electrode electrically connected to the inductor, a base electrode electrically connected to the second resistor and an emitter electrode electrically connected to the (-) terminal of the battery cell unit; a second capacitor electrically connected to the emitter electrode of the transistor; a first diode one side of which is electrically connected between the second resistor and the base electrode of the transistor and the other side of which is electrically connected to the (-) terminal of the battery cell unit; and a second diode electrically connected to the collector electrode.

The jump starter apparatus may further including a limit current controller configured to receive a sensed current Iₛₑₙₛₑ flowing through a closed circuit formed by a battery, the booster circuit unit, and the discharged battery so as not to exceed Iₗᵢₘᵢₜ and to compare Iₗᵢₘᵢₜ and Iₛₑₙₛₑ through a comparator.

### [Advantageous Effects]

According to the present invention, in a situation where battery discharge continuously increases due to a sudden cold wave, electric and electronic devices increasing in number to improve performance of the vehicle, or vehicle products and high-brightness exteriors which are designed to operate even after the vehicle stalls, costs may be reduced by using a smaller number of batteries than in a conventional portable jump starter apparatus while battery charging can be completed in only a few seconds. Moreover, portability and convenience may be maximized as volume and weight can be minimized.

### [Description of Drawings]

FIG. 1 is a block diagram of a jump starter apparatus for recharging a discharged battery of a transportation means according to a preferred embodiment of the present invention; and
FIG. 2 is a circuit diagram of the booster circuit unit in FIG. 1.

### [Best Mode]

A jump starter apparatus for recharging a discharged battery of a transportation means according to the present invention includes a battery cell unit including a plurality of primary or secondary battery cells electrically connected in series, in parallel, or in combination thereof so as to generate direct current power for recharging the discharged battery of the transportation means; a booster circuit unit electrically connected to a (+) terminal and a (-) terminal of the battery cell unit so as to boost a voltage of power output from the battery cell unit to a specific value or higher; and a connection terminal one side of which is electrically connected - to the booster circuit unit and the other side of which is electrically connected to a terminal of a battery to be recharged.

### [Mode for Invention]

Hereinafter, preferred embodiments of the present invention will be described in detail with reference to the accompanying drawings. It is to be noted that, in assigning reference numerals to the constituent elements in the drawings, the same constituent elements are denoted by the same reference numerals even though they are shown in different drawings. In the following description of the present invention, a detailed description of known configurations and functions incorporated herein will be omitted when it may make the subject matter of the present invention rather unclear. It is to be understood that the invention is not limited to the disclosed embodiments. It will be apparent to those skilled in the art that various modifications and variations can be made in the present invention without departing from the spirit or scope of the invention.

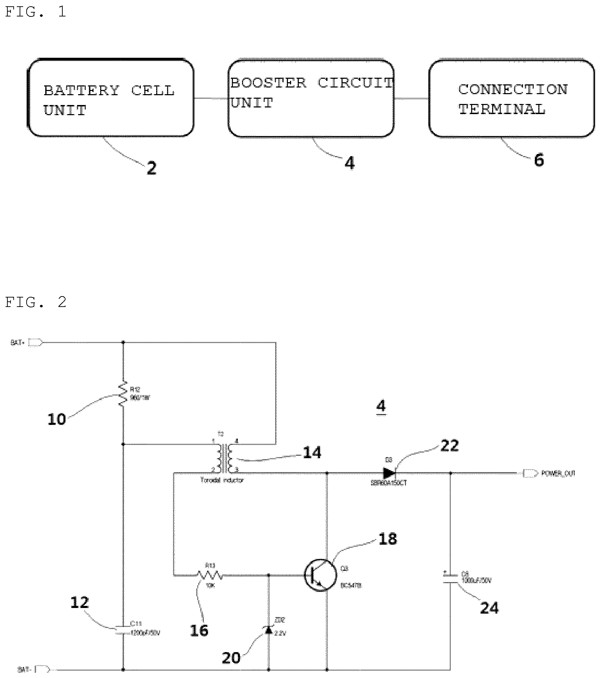

FIG. 1 is a block diagram of a jump starter apparatus for recharging a discharged battery of a transportation means according to a preferred embodiment of the present invention, and FIG. 2 is a circuit diagram of the booster circuit unit in FIG. 1.

Referring to FIGS. 1 and 2, a jump starter apparatus for recharging a battery of a transportation means according to an embodiment of the present invention includes a battery cell unit 2, a booster circuit unit 6, and a connection terminal 6.

The battery cell unit 2 includes a plurality of battery cells electrically connected in series/parallel to generate a direct current (DC) power for recharging the discharged battery of the transportation means. As the battery cell, a commercially available primary battery cell (battery) can be used, and a rechargeable secondary battery cell can also be used. When the secondary battery cell is used, a protection circuit may be additionally provided to prevent overcharge and over discharge.

For example, the battery cell unit 2 may be configured by connecting a plurality of primary battery cells having a voltage of 1.5 V in series/parallel. By generating a direct current of 30 A or more through serial/parallel connection of the plurality of primary battery cells, charging may be completed in only a few seconds and thus the transportation means can be started immediately. If the transportation means is an automobile, the vehicle battery operates at approximately 12 V, and a voltage of 48V will be used for some future automobile models. Therefore, in the present invention, a booster circuit for boosting the voltage is needed.

The booster circuit unit 4 is connected to the (+) terminal and the (-) terminal of the battery cell unit 2 so as to boost the voltage of the power output from the battery cell unit 2 to a specific value (for example, 12 to 48 V) or more and output the boosted voltage to the connection terminal 6.

Referring to FIG. 2, the booster circuit unit 4 includes a first resistor 10 electrically connected to the (+) terminal of the battery cell unit 2, a first capacitor 12 electrically connected between the first resistor 10 and the (-) terminal of the battery cell unit 2, an inductor 14 electrically connected to the (+) terminal side of the battery cell unit 2 and connected in parallel with the first resistor 10, a second resistor 16 electrically connected to the inductor 14, a transistor 18 having a collector electrode C electrically connected to the inductor 14, a base electrode B electrically connected to the second resistor 16 and an emitter electrode E electrically connected to the (-) terminal of the battery cell unit 2, a second capacitor 24 electrically connected to the emitter electrode E of the transistor 18, a first diode 20 electrically connected between the second resistor 16 and the base electrode B of the transistor 18 on one side and electrically connected to the (-) terminal of the battery cell unit 2 on the other side, and a second diode 22 electrically connected to the collector electrode C.

The first resistor 10 and the first capacitor 12 correspond to an RC circuit for adjusting the oscillation frequency, and the first resistor 10 is implemented as a variable resistor or a typical resistor to adjust the output voltage.

An electromotive force is generated in the inductor 14 by the ON/OFF operation of the transistor 18. In other words, the transistor 18 serves as a switch for controlling ON/OFF, such that current flows or does not flow in the circuit. As a result, induction electromotive force is generated in the toroid core of the inductor 14, and thus electrical energy is stored. The voltage of the battery cell unit 2 and the voltage stored in the inductor 14 are combined to generate a boost effect.

When a certain voltage is obtained by the first resistor 10 and a charging current of the first capacitor 12 in supplying power, the transistor 18 is turned on, and the current flows along a path running from the first resistor 10 to the inductor 14 to the second resistor 16 to the transistor 18.

The second resistor 16 is an element for protecting the transistor 18 from overvoltage, and a Zener diode may be used as the first diode 20. The second diode 22 and the second capacitor 24 are elements for converting AC into DC.

One side of the connection terminal 6 is electrically connected to the booster circuit unit 4, and the other side thereof is electrically connected to the terminal of the battery to be recharged. DC power having a current of 30 A or more and a voltage of 12 to 48 V is output through the connection terminal 6.

In the present invention, the booster circuit unit may be implemented by various switch-based power conversion circuits such as a boost converter and a flyback converter. The booster circuit is required have a limit control function of limiting the supplementary current and the current below the maximum discharge current of the battery cell. A typical booster circuit controls the output voltage to be constant. In order to protect the booster circuit and the battery cells, it is necessary to control the current flowing through the battery cell, the booster circuit unit, and the discharged battery so as not to exceed a certain level.

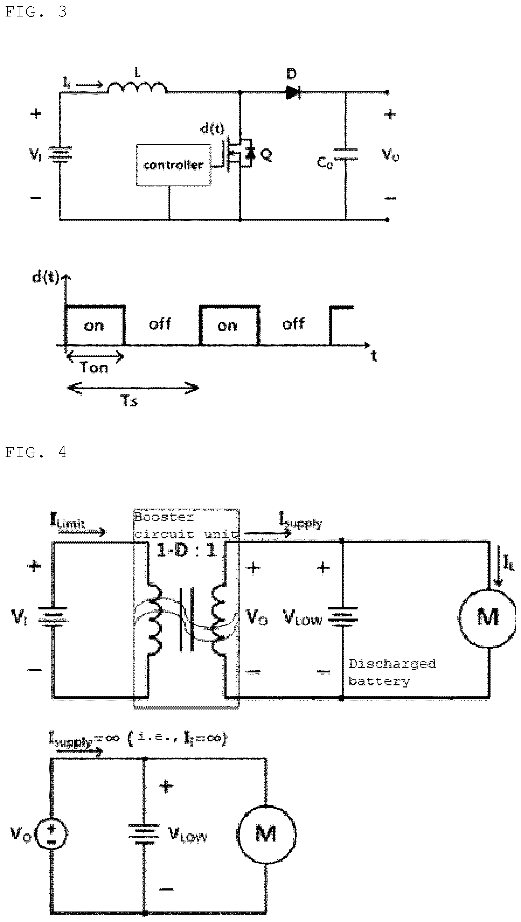

FIG. 3 is a diagram illustrating the principle of the booster circuit unit based on the boost converter including the limit current control.

It is known that V₀/V₁ = 1/(1-D), and the booster circuit unit can be seen as a DC transformer that has a winding ratio of (1-D): 1. Here, D is defined as D = Ton/Ts. In this case, I₁ is controlled with Iₗᵢₘᵢₜ, and therefore R_{TH} is defined as R_{TH} = 1/ (1-D)×V₁/I₁ and R is fixed as R = 1/ (1-D)×V₁/Iₗᵢₘᵢₜ.

Here, if control of Iₗᵢₘᵢₜ is not included, I₁ = ∞ when the booster circuit is connected to the discharged battery, causing damage to the circuit.

The present invention can be implemented without addition of R_{TH} by introducing a boost converter. Accordingly, power consumption may be reduced while using a smaller number of battery cells connected in series.

FIG. 4 is a diagram illustrating a problem of a booster circuit unit that includes the limit current control function.

The booster circuit shown in the upper part of FIG. 4 can be represented by an equivalent circuit shown in the lower part.

V_{LOW} has a low voltage since it represents a discharged battery. Here, V_{LOW} is lower than the output voltage V0 of the booster circuit, and therefore I_{supply} becomes an infinite current, which causes a problem such as burning of the booster circuit or blowing-out of battery cells.

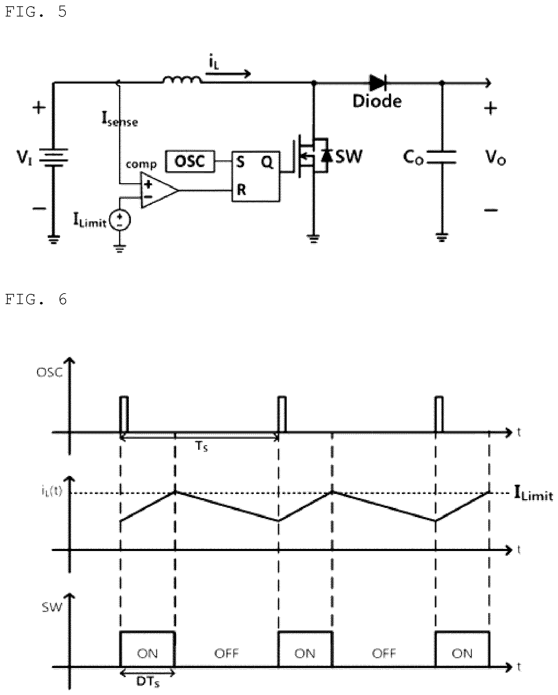

FIG. 5 is a circuit diagram showing an example of implementing a booster circuit including limit current control based on a boost converter. FIG. 6 is a graph depicting values of oscillation, i_{L}(t), and SW over time in the booster circuit of FIG. 5.

The boost converter receives and compares the limited current and the current sensed by the inductor in connection with a comparator. In the SR latch, the switch signal of S is applied through the oscillator (OSC). When S becomes 1, the output of the SR latch becomes 1.

If the current sensed by the comparator is less than the limit current, R is set to zero. On the other hand, if the current sensed by the comparator is greater than the limit current, R is set to 1 and the output of the SR latch becomes 0.

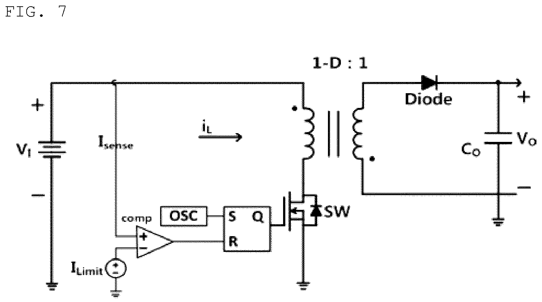

FIG. 7 is a circuit diagram illustrating an example of implementing a booster circuit including limit current control based on a flyback converter.

The flyback converter receives and controls a sensed current using the same method as used for the boost converter.

The jump starter apparatus for recharging a discharged battery of a transportation means according to the present invention is configured using multiple battery cells and a booster circuit, and therefore it may have a minimized volume and a minimized weight, thus being easy to carry and use. Conventional portable jump starter apparatuses released on the market are costly and take at least 10 minutes to complete charging, and thus consumers are reluctant to use the same. In recent years, various electric and electronic devices including LED lights and a black box device are operated even after the engine of the vehicle is stopped. Therefore, the discharge continuously increases. The jump starter apparatus for recharging a discharged battery of a transportation means according to the present invention can be constituted by multiple battery cells, and therefore it can reduce the cost compared to the conventional portable jump starter apparatuses and complete charging in 5 to 10 seconds using a current of 30 A or more. Further, it may have a minimized volume and a minimized weight. Accordingly, portability and convenience may be maximized.

A 48V battery will be applied to automobiles (including hybrid vehicles) in the future, and the configuration of FIG. 1 and the booster circuit unit of FIG. 2a are applicable to a direct current voltage of 48V, which is a battery voltage of a next generation vehicle.

It will be apparent to those skilled in the art that various modifications, substitutions and alterations can be made hereto without departing from the spirit and scope of the invention as defined by the appended claims. Therefore, the embodiments disclosed in the present invention and the accompanying drawings are intended to illustrate rather than limit the technical spirit of the present invention, and the scope of the technical idea of the present invention is not limited by these embodiments and the accompanying drawings. The scope of protection of the present invention should be construed according to the following claims, and all changes coming within the meaning and equivalency range of the appended claims are intended to be embraced therein.

## Claims

1. A jump starter apparatus for recharging a discharged battery of a transportation means, comprising:
a battery cell unit comprising a plurality of primary or secondary battery cells electrically connected in series, in parallel, or in combination thereof so as to generate direct current power for recharging the discharged battery of the transportation means;
a booster circuit unit electrically connected to a (+) terminal and a (-) terminal of the battery cell unit so as to boost a voltage of power output from the battery cell unit to a specific value or higher; and
a connection terminal one side of which is electrically connected - to the booster circuit unit and the other side of which is electrically connected to a terminal of a battery to be recharged.

2. The jump starter apparatus according to claim 1, wherein the battery cell unit generates a direct current greater than or equal to 30 A by connecting the plurality of primary battery cells in series, parallel, or combination thereof, and the booster circuit unit outputs a direct current voltage of 12 to 48 V.

3. The jump starter apparatus according to claim 1, wherein the booster circuit unit comprises:
a first resistor electrically connected to the (+) terminal of the battery cell unit;
a first capacitor electrically connected between the first resistor and the (-) terminal of the battery cell unit;
an inductor electrically connected to the (+) terminal of the battery cell unit and connected in parallel with the first resistor;
a second resistor electrically connected to the inductor;
a transistor having a collector electrode electrically connected to the inductor, a base electrode electrically connected to the second resistor and an emitter electrode electrically connected to the (-) terminal of the battery cell unit;
a second capacitor electrically connected to the emitter electrode of the transistor;
a first diode one side of which is electrically connected between the second resistor and the base electrode of the transistor and the other side of which is electrically connected to the (-) terminal of the battery cell unit; and
a second diode electrically connected to the collector electrode.

4. The jump starter apparatus according to claim 1, further comprising:
a limit current controller configured to receive a sensed current Iₛₑₙₛₑ flowing through a closed circuit formed by a battery, the booster circuit unit, and the discharged battery so as not to exceed Iₗᵢₘᵢₜ and to compare Iₗᵢₘᵢₜ and Iₛₑₙₛₑ through a comparator.

5. The jump starter apparatus according to claim 3 or 4, wherein the jump starter apparatus is applicable to a direct current voltage of 48 V, a battery voltage for a military armored vehicle and a next-generation transportation means, through the booster circuit unit.
